# EUROPÄISCHE PATENTANMELDUNG

(11) **EP 4 826 909 A1**
(43) Veröffentlichungstag der Anmeldung: **21.10.2026**
(21) Anmeldenummer: 26166696.0
(22) Anmeldetag: 23.03.2026
(51) Int. Cl.: H01Q 1/38, G01S 7/481, H01Q 3/02, H01Q 13/02, H01Q 21/06

(54) **SCANNER**

(30) Priorität: 16.04.2025 DE 102025114896
(71) Anmelder: SICK AG, 79183 Waldkirch (DE)
(72) Erfinder: Voigt, Rene, 21629 Neu Wulmstorf (DE)
(74) Vertreter: Manitz Finsterwald Patent- und Rechtsanwaltspartnerschaft mbB

(57) **Zusammenfassung**

Ein Scanner umfasst eine Basis, einen Messkopf, der um eine Rotationsachse drehbar an der Basis gelagert und dazu ausgebildet ist, Sendelicht in einen Überwachungsbereich zu senden und anhand von Empfangslicht aus dem Überwachungsbereich Messdaten zu ermitteln, und eine Datenübertragungseinrichtung zum Übertragen der ermittelten Messdaten vom Messkopf zur Basis. Die Datenübertragungseinrichtung weist einen Hochfrequenz-Sender zum Erzeugen von elektromagnetischen Hochfrequenz-Signalen, eine an den Hochfrequenz-Sender angeschlossene und fest mit dem Messkopf verbundene Sende-Antenne zum Aussenden der Hochfrequenz-Signale und eine fest mit der Basis verbundene Empfangs-Antenne zum Empfangen der ausgesendeten Hochfrequenz-Signale auf. Die Sende-Antenne umfasst eine ebene Antennenstruktur, die sich in einer rechtwinklig zur Rotationsachse ausgerichteten Abstrahlungsebene erstreckt und die für eine radial von der Rotationsachse weg gerichtete Abstrahlung der Hochfrequenz-Signale ausgelegt ist, wobei die Empfangs-Antenne in einem Abstand zu der ebenen Antennenstruktur in der Abstrahlungsebene angeordnet ist.

## Beschreibung

Die Erfindung betrifft einen Scanner, insbesondere einen Laserscanner, mit einer Basis, einem Messkopf, der um eine Rotationsachse drehbar an der Basis gelagert und mittels eines Antriebs in eine Drehbewegung versetzbar ist, wobei der Messkopf dazu ausgebildet ist, Sendelicht in einen Überwachungsbereich zu senden und anhand von Empfangslicht aus dem Überwachungsbereich Messdaten zu ermitteln, und einer Datenübertragungseinrichtung zum Übertragen der ermittelten Messdaten vom Messkopf zur Basis.

Derartige Scanner werden in vielfältiger Weise dazu verwendet, Gefahrenzonen zu überwachen, Objekte zu detektieren oder Entfernungen zu bestimmen. Bei den Messdaten kann es sich um Rohdaten in Form von Lichtlaufzeiten, Lichtintensitäten oder dergleichen handeln oder um vorverarbeitete Daten, welche beispielsweise Positionen und/oder Eigenschaften von im Überwachungsbereich befindlichen Objekten angeben.

Die Drehbewegung des Messkopfs ermöglicht das Abdecken eines weiten Messfelds, wobei der Antrieb vorzugsweise für eine kontinuierliche Rotation des Messkopfs ausgebildet ist, beispielsweise mit einer Drehzahl von 5 Hz und mehr. Eine berührungslose Datenübertragung vom Messkopf zur Basis ist daher bevorzugt. Beispielsweise können bei Scannern Datenübertragungseinrichtungen zum Einsatz kommen, die auf induktiver Kopplung beruhen. Die hierbei erzielte Datenübertragungsrate ist jedoch für bestimmte Anwendungsgebiete zu gering. Höhere Datenübertragungsraten können mit einer optischen Kopplung über eine Faser erreicht werden, die durch die als Hohlwelle ausgeführte Antriebswelle hindurchgeführt ist. Eine solche Datenübertragung eignet sich aber nicht für Systeme mit Vollwellenantrieb.

Es ist eine Aufgabe der Erfindung, bei einem Scanner eine berührungslose Datenübertragung vom rotierenden Messkopf zur stationären Basis zu ermöglichen, die eine hohe Datenübertragungsrate aufweist und unabhängig von der Gestaltung der Antriebswelle ist.

Die Lösung der Aufgabe erfolgt durch einen Scanner mit den Merkmalen des Anspruchs 1.

Erfindungsgemäß weist die Datenübertragungseinrichtung einen Hochfrequenz-Sender zum Erzeugen von elektromagnetischen Hochfrequenz-Signalen, eine an den Hochfrequenz-Sender angeschlossene und fest mit dem Messkopf verbundene Sende-Antenne zum Aussenden der Hochfrequenz-Signale und eine fest mit der Basis verbundene Empfangs-Antenne zum Empfangen der ausgesendeten Hochfrequenz-Signale auf, wobei die Sende-Antenne eine ebene Antennenstruktur umfasst, die sich in einer rechtwinklig zur Rotationsachse ausgerichteten Abstrahlungsebene erstreckt und die für eine radial von der Rotationsachse weg gerichtete Abstrahlung der Hochfrequenz-Signale ausgelegt ist, wobei die Empfangs-Antenne in einem Abstand zu der ebenen Antennenstruktur in der Abstrahlungsebene angeordnet ist.

Eine Übermittlung der Messdaten über Hochfrequenz-Signale ist besonders schnell und zuverlässig. Zudem besteht nur eine geringe Anfälligkeit für Störungen. Es ist nicht erforderlich, den Luftspalt zwischen der Sende-Antenne und der Empfangs-Antenne besonders gering zu halten, so dass sich bei der Fertigung eines erfindungsgemäßen Scanners kein besonderer mechanischer Aufwand ergibt. Dadurch, dass die Abstrahlung der Sende-Antenne radial nach außen erfolgt, muss der axiale Zentralbereich des Scanners nicht für die Datenübertragung freigehalten werden. Insbesondere ist ein Antrieb über eine Hohlwelle nicht zwingend erforderlich. Die ebene Antennenstruktur weist eine vorteilhafte Abstrahlungscharakteristik mit einer vollständigen radialen Abdeckung und einer geringen axialen Ausdehnung auf. Eine zuverlässige Datenübertragung ist in jeder Drehstellung des Messkopfs möglich.

Bei einem erfindungsgemäßen Scanner ist die Rotationsachse eine Normale zur Abstrahlungsebene. Es versteht sich, dass die ebene Antennenstruktur nicht im mathematischen Sinne eben ist, sondern eine gewisse axiale Ausdehnung aufweist, die allerdings wesentlich geringer ist als die Ausdehnung quer zu der Rotationsachse.

Vorzugsweise ist die ebene Antennenstruktur für eine Abstrahlung der Hochfrequenz-Signale in sämtlichen radialen Richtungen ausgelegt. Dadurch ist sichergestellt, dass unabhängig von der Drehstellung des Messkopfs ein Empfang der ausgesendeten Hochfrequenz-Signale mittels einer einzelnen Empfangs-Antenne möglich ist. Es ist nicht erforderlich, mehrere, entlang des Umfangs der Sende-Antenne verteilt angeordnete Empfangs-Antennen vorzusehen.

Die ebene Antennenstruktur kann bezüglich der Rotationsachse eine Rotationssymmetrie aufweisen, bevorzugt eine wenigstens vierfache und besonders bevorzugt eine wenigstens sechsfache Rotationssymmetrie. Dadurch wird eine im Wesentlichen gleichmäßige Abstrahlung innerhalb der Abstrahlungsebene erzielt.

Gemäß einer Ausführungsform der Erfindung weist die ebene Antennenstruktur wenigstens zwei verschiedene Substrukturen auf, die jeweils für sich genommen eine Rotationssymmetrie bezüglich der Rotationsachse aufweisen. Durch das Vorsehen unterschiedlicher rotationssymmetrischer Substrukturen ist eine flexible Anpassung der Strahlungscharakteristik der Sende-Antenne möglich.

Vorzugsweise ist die Impedanz der ebenen Antennenstruktur für den Freiraum angepasst, um Reflexionen zu vermeiden.

Es kann vorgesehen sein, dass der Hochfrequenz-Sender und/oder eine zwischen den Hochfrequenz-Sender und die Sende-Antenne eingefügte Feed-Struktur im Bereich der Rotationsachse am Messkopf angeordnet ist/sind. Somit ergibt sich durch das Eigengewicht des betreffenden Bauteils keine Unwucht.

Bevorzugt umfasst die ebene Antennenstruktur einen substratintegrierten Wellenleiter (Substrate Integrated Waveguide, SIW). Derartige Antennen sind besonders leicht und beanspruchen nur wenig Bauraum. Zudem sind die Herstellungskosten gering.

Der substratintegrierte Wellenleiter kann eine Platte aus einem dielektrischen Material aufweisen, die beidseitig wenigstens bereichsweise mit einem elektrisch leitenden Material beschichtet ist und eine Anordnung aus aneinandergereihten Durchkontaktierungen aufweist. Die Fertigung einer solchen beschichteten und strukturiert durchkontaktierten Platte ist relativ einfach und kostengünstig. Vorzugsweise ist die Platte scheibenförmig. Durch die Erstreckungsebene der Platte ist die Abstrahlungsebene der Sende-Antenne vorgegeben. Bei dem dielektrischen Material kann es sich um einen Kunststoff handeln, insbesondere um einen keramikverstärkten Kunststoff, während das leitende Material zum Beispiel Kupfer ist.

Vorzugsweise ist durch die aneinandergereihten Durchkontaktierungen eine Hornantennen-Anordnung gebildet. Insbesondere können durch die Verläufe der Reihen endseitige Aufweitungen von Wellenleitern gebildet sein, um einen allmählichen Übergang zum freien Raum zu schaffen und so unerwünschte Reflexionen zu vermeiden.

Gemäß einer speziellen Ausgestaltung der Erfindung bilden die Durchkontaktierungen in axialer Betrachtung ein sternförmiges Muster. Dies hat sich in der Praxis als besonders günstig erwiesen.

Eine weitere Ausführungsform der Erfindung sieht vor, dass die Platte aus dem dielektrischen Material mehrere Durchführungen für Befestigungsmittel aufweist. Dies erleichtert die Befestigung der Platte am Messkopf, beispielsweise durch Verschrauben. Gemäß einer speziellen Ausgestaltung der Erfindung ist die Platte an einer Oberseite des Messkopfs angeschraubt.

Der Hochfrequenz-Sender kann an der Platte aus dem dielektrischen Material angebracht sein, um Bauraum zu sparen.

Es kann vorgesehen sein, dass die Beschichtung der Platte mit dem elektrisch leitenden Material wenigstens einen ausgesparten Bereich aufweist, vorzugsweise eine Anordnung von mehreren bezüglich der Rotationsachse radialsymmetrischen Bereichen. Durch solche Aussparungen oder Freilassungen kann die Feldanpassung verbessert werden. Beispielsweise können die ausgesparten Bereiche schlitzförmig sein.

Gemäß einer weiteren Ausführungsform der Erfindung ist der Hochfrequenz-Sender als integrierter Schaltkreis in einer Schicht eines mehrschichtigen Leiterplatten-Aufbaus ausgeführt und die ebene Antennenstruktur ist in einer anderen Schicht des mehrschichtigen Leiterplatten-Aufbaus ausgebildet. Ein solcher, hochintegrierter Aufbau ist besonders platzsparend.

Die Empfangs-Antenne kann als einzelne Hornantenne ausgeführt sein. Beispielsweise kann eine hohlprofilartige Struktur aus elektrisch leitendem Material mit einer endseitigen trichterförmigen Erweiterung als Hornantenne vorgesehen sein.

Die Hornantenne kann auf eine Leiterplatte aufgebracht sein, die einen Empfangsschaltkreis trägt.

Der Hochfrequenz-Sender ist bevorzugt zum Erzeugen von Hochfrequenz-Signalen im Millimeterwellen-Bereich, insbesondere im V-Band, ausgebildet. Dieser Frequenzbereich eignet sich in besonderer Weise für eine Datenübertragung mit hoher Übertragungsgeschwindigkeit über vergleichsweise kurze Distanzen.

Gemäß einer weiteren Ausführungsform der Erfindung ist die Datenübertragungseinrichtung für eine bidirektionale Verbindung ausgelegt. Somit können beispielsweise Steuerungsdaten von der Basis an den Messkopf übertragen werden.

Gemäß einer weiteren Ausführungsform der Erfindung ist an der Basis eine elektronische Kommunikationseinheit angeordnet, die mit der Empfangs-Antenne in Signalverbindung steht und zum Verarbeiten und/oder Weiterleiten der von der Empfangs-Antenne empfangenen Hochfrequenz-Signale ausgebildet ist. Die elektronische Kommunikationseinheit kann durch einen integrierten Schaltkreis gebildet sein und mit einer elektronischen Auswertungseinheit des Scanners in Signalverbindung stehen.

Der Scanner kann eine elektronische Steuereinrichtung aufweisen, die dazu ausgebildet ist, anhand einer erfassten Lichtlaufzeit (TOF - time of flight) die Abstände von im Überwachungsbereich befindlichen Objekten als Messdaten zu bestimmen. Insbesondere kann ein erfindungsgemäßer Scanner nach dem LiDAR-Prinzip arbeiten (light detection and ranging). LiDAR-Scanner können je nach Ausführung eine oder mehrere Abtastebenen aufweisen oder sogar vollständig dreidimensional abtasten (3D-LiDAR), wobei die Datenrate bei kontinuierlicher dreidimensionaler Abtastung besonders hoch ist.

Vorzugsweise ist der Messkopf mittels einer Vollwelle drehbar an der Basis gelagert. Eine Vollwelle ist wesentlich kostengünstiger als eine Hohlwelle. Beispielsweise kann es sich bei der Vollwelle um eine Ausgangswelle eines Elektromotors handeln.

Weiterbildungen der Erfindung sind auch den abhängigen Ansprüchen, der Beschreibung, sowie der beigefügten Zeichnung zu entnehmen.

Die Erfindung wird nachfolgend beispielhaft unter Bezugnahme auf die Zeichnung beschrieben.
- Fig. 1: zeigt einen erfindungsgemäßen Scanner in einer vereinfachten Schnittansicht.
- Fig. 2: ist eine Draufsicht auf eine Datenübertragungseinrichtung des in Fig. 1 gezeigten Scanners.

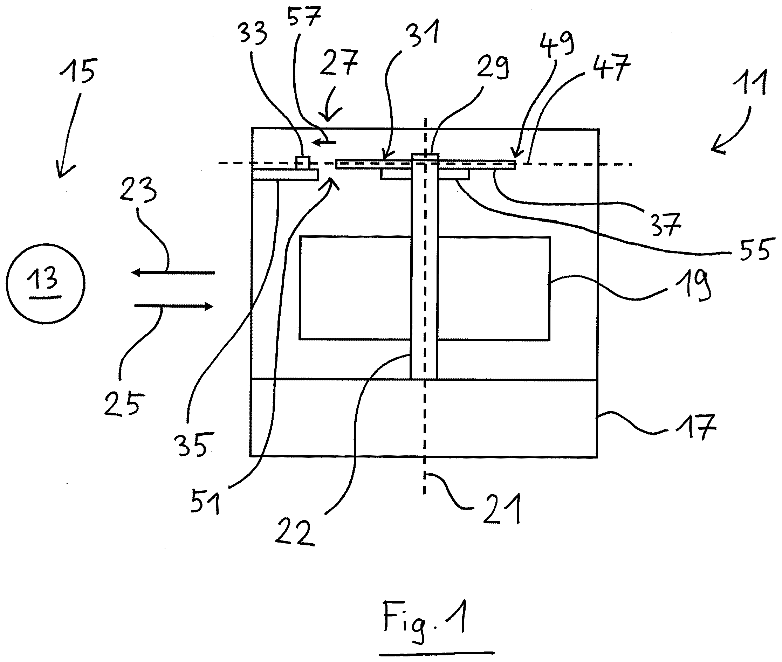

Der in Fig. 1 dargestellte, gemäß einer Ausführungsform der Erfindung gestaltete Scanner 11 dient zum Detektieren von Objekten 13 in einem Überwachungsbereich 15, beispielsweise mittels eines LiDAR-Verfahrens. Der Scanner 11 weist eine Basis 17 auf, an der ein Messkopf 19 um eine Rotationsachse 21 drehbar gelagert ist. Ein vorzugsweise in der Basis 17 untergebrachter, in Fig. 1 nicht dargestellter Antrieb wie zum Beispiel ein Elektromotor dient dazu, den Messkopf 19 während des Scanbetriebs über eine mit der Rotationsachse 21 fluchtende Vollwelle 22 in eine kontinuierliche Drehbewegung zu versetzen, beispielsweise mit einer Drehzahl von 20 Hz oder mehr. Hinsichtlich der Scanbewegung bildet also die Basis 17 den Stator, während der Messkopf 19 den Rotor bildet.

Der Messkopf 19 ist dazu ausgebildet, Sendelicht 23 in den Überwachungsbereich 15 zu senden und anhand von Empfangslicht 25 aus dem Überwachungsbereich 15 Messdaten zu ermitteln. Hierfür ist der Messkopf 19 mit einem Lichtsender in Form einer Leuchtdiode oder einer Laserdiode sowie mit einem Lichtempfänger wie zum Beispiel einer Fotodiode ausgestattet, was in Fig. 1 jedoch nicht gezeigt ist. Für eine dreidimensionale Abtastung des Überwachungsbereichs 15 kann außerdem eine Vorrichtung zur Winkelablenkung der Sendelichtstrahlen um eine quer zur Rotationsachse 21 verlaufende Kippachse am Messkopf 19 vorgesehen sein, was ebenfalls in Fig. 1 nicht dargestellt ist. Bei den Messdaten kann es sich um Lichtlaufzeiten, Lichtintensitäten und/oder Objektpositionen handeln, die vorzugsweise jeweiligen Abtastpositionen zugeordnet sind. Insbesondere bei dreidimensionaler Abtastung und hoher Drehzahl fällt pro Zeiteinheit eine beträchtliche Menge an Messdaten an.

Um die Messdaten kontaktlos vom rotierenden Messkopf 19 zur ortsfesten Basis 17 zu übertragen, ist eine Datenübertragungseinrichtung 27 vorgesehen. Diese beruht auf einer Übermittlung von elektromagnetischen Hochfrequenz-Signalen und umfasst dementsprechend einen Hochfrequenz-Sender 29, beispielsweise in Form eines integrierten Schaltkreises. Vorzugsweise ist der Hochfrequenz-Sender 29 zum Erzeugen von Signalen im 60-GHz-Band ausgebildet. Die in Hochfrequenz-Signale umzusetzenden Messdaten kann der Hochfrequenz-Sender 29 über einen direkten elektrischen Kontakt mit einem nicht eigens dargestellten Schaltkreis des Messkopfs 19 empfangen.

Das Aussenden der von dem Hochfrequenz-Sender 29 erzeugten Signale erfolgt über eine Sende-Antenne 31, die antriebswirksam mit der Vollwelle 22 verbunden ist. Eine an der Basis 17 befestigte Empfangs-Antenne 33 dient zum Empfangen der Hochfrequenz-Signale. Die Empfangs-Antenne 33 ist an eine elektronische Kommunikationseinheit 35 angeschlossen, die zum Verarbeiten und Weiterleiten der empfangenen Hochfrequenz-Signale ausgebildet ist. Insbesondere kann die elektronische Kommunikationseinheit 35 dazu ausgebildet sein, die Hochfrequenz-Signale wieder in Messdaten umzusetzen und die Messdaten an eine nicht gezeigte Auswertungseinheit des Scanners 11 weiterzuleiten.

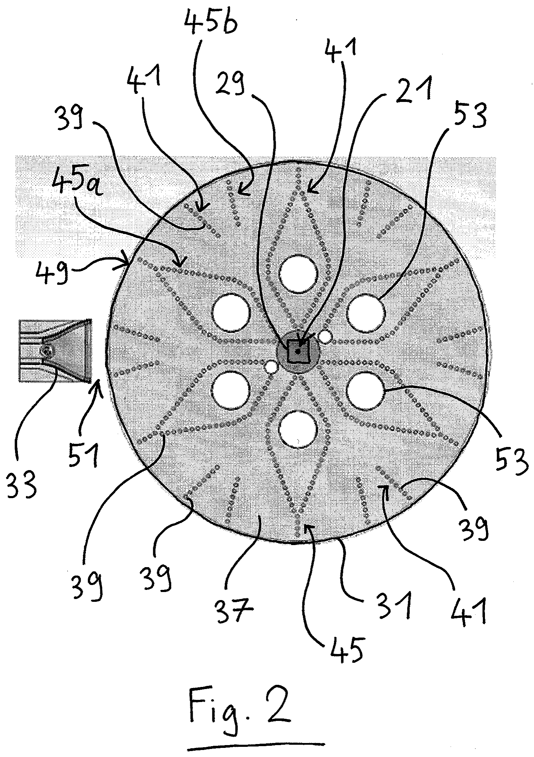

Die Fig. 2 zeigt die Anordnung aus Sende-Antenne 31 und Empfangs-Antenne 33 in Einzeldarstellung von oben. Die Sende-Antenne 31 ist als substratintegrierter Wellenleiter (Substrate Integrated Waveguide, SIW) ausgeführt. Speziell umfasst die Sende-Antenne 31 eine scheibenförmige Platte 37 aus einem dielektrischen Material, die beidseitig mit einem elektrisch leitenden Material beschichtet ist und eine Anordnung aus aneinandergereihten Durchkontaktierungen 39 oder Vias aufweist. Durch die Reihen 41 aus Durchkontaktierungen 39 ist eine ebene Antennenstruktur 45 gebildet, die bezüglich der Rotationsachse 21 eine Rotationssymmetrie aufweist. Die Beschichtung der Platte 37 kann zur Feldanpassung ausgesparte Bereiche aufweisen, beispielsweise in Form von Schlitzen, was in Fig. 2 jedoch nicht dargestellt ist. Der Hochfrequenz-Sender 29 sitzt im Zentrum der scheibenförmigen Platte 37, also im Bereich der Rotationsachse 21. Demgemäß ist die Sende-Antenne 31 in der Lage, innerhalb einer rechtwinklig zur Rotationsachse 21 verlaufenden Abstrahlungsebene 47 (Fig. 1) Hochfrequenz-Signale in alle radialen Richtungen von der Rotationsachse 21 weg gerichtet abzustrahlen.

Die Empfangs-Antenne 33 ist wie in Fig. 1 gezeigt in der Abstrahlungsebene 47 angeordnet und somit in der Lage, unabhängig von der Drehstellung der Sende-Antenne 31 abgestrahlte Hochfrequenz-Signale zu empfangen. Vorzugsweise ist die Empfangs-Antenne 33 eine einzelne Hornantenne, die direkt an der Kommunikationseinheit 35 angeordnet ist. Zwischen dem äußeren Umfang 49 der Platte 37 und der Empfangs-Antenne 33 ist ein Luftspalt 51 gebildet.

Die ebene Antennenstruktur 45 bildet eine reflexionsarme Hornantennen-Anordnung. Bei dem dargestellten Ausführungsbeispiel umfasst die ebene Antennenstruktur 45 zwei Substrukturen 45a, 45b, die jeweils für sich genommen rotationssymmetrisch sind. Es könnten auch mehr als zwei Substrukturen 45a, 45b vorgesehen sein. Durch die Anzahl und Formgebung der Substrukturen 45a, 45b ist in weiten Bereichen eine Anpassung der Strahlungscharakteristik der Sende-Antenne 31 an eine Anwendungsvorgabe möglich.

Die Platte 37 weist Durchführungen 53 für Befestigungsmittel auf, wodurch das Befestigen der Platte 37 an einem antriebswirksam mit der Vollwelle 22 verbundenen Trägerbauteil 55 (Fig. 1) erleichtert ist.

Die in Fig. 1 gezeigte Anordnung der Sende-Antenne 31 oberhalb des Messkopfs 19 ist nicht zwingend. Der Messkopf 19 könnte auch oberhalb der Sende-Antenne 31 angeordnet sein.

Gemäß einer nicht dargestellten Ausführungsform der Erfindung ist der Hochfrequenz-Sender 29 als integrierter Schaltkreis in einer Schicht eines mehrschichtigen Leiterplatten-Aufbaus ausgeführt und die ebene Antennenstruktur 45 ist in einer anderen Schicht des mehrschichtigen Leiterplatten-Aufbaus ausgebildet. Ein derartiger Mehrschicht-Aufbau ist besonders platzsparend.

Es hat sich gezeigt, dass bei einem erfindungsgemäßen Scanner 11 eine Daten-übermittlung mit mehreren GBit/s möglich ist. Die Übertragung der Messdaten erfolgt bei dem dargestellten Ausführungsbeispiel ausschließlich vom rotierenden Messkopf 19 zur stationären Basis 17, wie in Fig. 1 durch den Pfeil 57 angegeben ist. Die Datenübertragungseinrichtung 27 könnte jedoch auch für eine bidirektionale Verbindung ausgelegt sein.

### Bezugszeichenliste:

- 11: Scanner
- 13: Objekt
- 15: Überwachungsbereich
- 17: Basis
- 19: Messkopf
- 21: Rotationsachse
- 22: Vollwelle
- 23: Sendelicht
- 25: Empfangslicht
- 27: Datenübertragungseinrichtung
- 29: Hochfrequenz-Sender
- 31: Sende-Antenne
- 33: Empfangs-Antenne
- 35: Kommunikationseinheit
- 37: Platte
- 39: Durchkontaktierung
- 41: Reihe
- 45: ebene Antennenstruktur
- 45a, 45b: Substruktur
- 47: Abstrahlungsebene
- 49: äußerer Umfang
- 51: Luftspalt
- 53: Durchführung
- 55: Trägerbauteil

## Patentansprüche

1. Scanner (11), insbesondere Laserscanner, mit
einer Basis (17),
einem Messkopf (19), der um eine Rotationsachse (21) drehbar an der Basis (17) gelagert und mittels eines Antriebs in eine Drehbewegung versetzbar ist,
wobei der Messkopf (19) dazu ausgebildet ist, Sendelicht (23) in einen Überwachungsbereich (15) zu senden und anhand von Empfangslicht (25) aus dem Überwachungsbereich (15) Messdaten zu ermitteln, und einer Datenübertragungseinrichtung (27) zum Übertragen der ermittelten Messdaten vom Messkopf (19) zur Basis (17),
wobei die Datenübertragungseinrichtung (27) einen Hochfrequenz-Sender (29) zum Erzeugen von elektromagnetischen Hochfrequenz-Signalen, eine an den Hochfrequenz-Sender (29) angeschlossene und fest mit dem Messkopf (19) verbundene Sende-Antenne (31) zum Aussenden der Hochfrequenz-Signale und eine fest mit der Basis (17) verbundene Empfangs-Antenne (33) zum Empfangen der ausgesendeten Hochfrequenz-Signale aufweist,
wobei die Sende-Antenne (31) eine ebene Antennenstruktur (45) umfasst, die sich in einer rechtwinklig zur Rotationsachse (21) ausgerichteten Abstrahlungsebene (47) erstreckt und die für eine radial von der Rotationsachse (21) weg gerichtete Abstrahlung der Hochfrequenz-Signale ausgelegt ist, und wobei die Empfangs-Antenne (33) in einem Abstand zu der ebenen Antennenstruktur (45) in der Abstrahlungsebene (47) angeordnet ist.

2. Scanner nach Anspruch 1,
wobei die ebene Antennenstruktur (45) für eine Abstrahlung der Hochfrequenz-Signale in sämtlichen radialen Richtungen ausgelegt ist.

3. Scanner nach Anspruch 1 oder 2,
wobei die ebene Antennenstruktur (45) bezüglich der Rotationsachse (21) eine Rotationssymmetrie aufweist, bevorzugt eine wenigstens vierfache und besonders bevorzugt eine wenigstens sechsfache Rotationssymmetrie.

4. Scanner nach einem der vorstehenden Ansprüche,
wobei die ebene Antennenstruktur (45) wenigstens zwei verschiedene Substrukturen (45a, 45b) aufweist, die jeweils für sich genommen eine Rotationssymmetrie bezüglich der Rotationsachse (21) aufweisen.

5. Scanner nach einem der vorstehenden Ansprüche,
wobei der Hochfrequenz-Sender (29) und/oder eine zwischen den Hochfrequenz-Sender (29) und die Sende-Antenne (31) eingefügte Feed-Struktur im Bereich der Rotationsachse (21) am Messkopf (19) angeordnet ist/sind.

6. Scanner nach einem der vorstehenden Ansprüche,
wobei die ebene Antennenstruktur (45) einen substratintegrierten Wellenleiter (Substrate Integrated Waveguide, SIW) umfasst.

7. Scanner nach Anspruch 6,
wobei der substratintegrierte Wellenleiter eine Platte (37) aus einem dielektrischen Material aufweist, die beidseitig wenigstens bereichsweise mit einem elektrisch leitenden Material beschichtet ist und eine Anordnung aus aneinandergereihten Durchkontaktierungen (39) aufweist.

8. Scanner nach Anspruch 7,
wobei durch die aneinandergereihten Durchkontaktierungen (39) eine Hornantennen-Anordnung gebildet ist.

9. Scanner nach Anspruch 7 oder 8,
wobei die Durchkontaktierungen (39) in axialer Betrachtung ein sternförmiges Muster bilden.

10. Scanner nach einem der Ansprüche 7 bis 9,
wobei die Platte (37) aus dem dielektrischen Material mehrere Durchführungen (53) für Befestigungsmittel aufweist.

11. Scanner nach einem der Ansprüche 7 bis 10,
wobei der Hochfrequenz-Sender (29) an der Platte (37) aus dem dielektrischen Material angebracht ist.

12. Scanner nach einem der Ansprüche 7 bis 11,
wobei die Beschichtung der Platte (37) mit dem elektrisch leitenden Material wenigstens einen ausgesparten Bereich aufweist, vorzugsweise eine Anordnung von mehreren bezüglich der Rotationsachse (21) radialsymmetrischen Bereichen.

13. Scanner nach einem der vorstehenden Ansprüche,
wobei der Hochfrequenz-Sender (29) als integrierter Schaltkreis in einer Schicht eines mehrschichtigen Leiterplatten-Aufbaus ausgeführt ist und wobei die ebene Antennenstruktur (45) in einer anderen Schicht des mehrschichtigen Leiterplatten-Aufbaus ausgebildet ist
und/oder wobei die Impedanz der ebenen Antennenstruktur (45) für den Freiraum angepasst ist
und/oder wobei die Empfangs-Antenne (33) als einzelne Hornantenne ausgeführt ist.

14. Scanner nach einem der vorstehenden Ansprüche,
wobei der Hochfrequenz-Sender (29) zum Erzeugen von Hochfrequenz-Signalen im Millimeterwellen-Bereich, insbesondere im V-Band, ausgebildet ist
und/oder wobei die Datenübertragungseinrichtung (27) für eine bidirektionale Verbindung ausgelegt ist.

15. Scanner nach einem der vorstehenden Ansprüche,
wobei an der Basis (17) eine elektronische Kommunikationseinheit (35) angeordnet ist, die mit der Empfangs-Antenne (33) in Signalverbindung steht und zum Verarbeiten und/oder Weiterleiten der von der Empfangs-Antenne (33) empfangenen Hochfrequenz-Signale ausgebildet ist,
und/oder wobei der Scanner (11) eine elektronische Steuereinrichtung aufweist, die dazu ausgebildet ist, anhand einer erfassten Lichtlaufzeit die Abstände von im Überwachungsbereich (15) befindlichen Objekten (13) als Messdaten zu bestimmen,
und/oder wobei der Messkopf (19) mittels einer Vollwelle (22) drehbar an der Basis (17) gelagert ist.
